Europäisches Patentamt

European Patent Office

Office européen des brevets

(11) Publication number: **0 384 123**
**A1**

# EUROPEAN PATENT APPLICATION

(21) Application number: **90101052.0**

(22) Date of filing: **19.01.90**

(51) Int. Cl.⁵: **B29C 53/04, B65B 49/08**

(30) Priority: **21.02.89 IT 1951189**

(43) Date of publication of application:
**29.08.90 Bulletin 90/35**

(84) Designated Contracting States:
**AT BE CH DE DK ES FR GB GR IT LI LU NL SE**

(71) Applicant: **CO.BE.PLAST. S.R.L.**
**Via Vecchia Novi, 21, Località S. Antonio**
**I-15060 Basaluzzo - Alessandria(IT)**

(72) Inventor: **Colonna, Vincenzo**
**Via Monterotondo, 66**
**I-15067 Novi Ligure - Alessandria(IT)**

(74) Representative: **Vannini, Torquato et al**
**JACOBACCI-CASETTA & PERANI S.p.A. 7 Via**
**Visconti di Modrone**
**I-20122 Milan(IT)**

(54) **Bending machine particularly for blister-package making lines.**

(57) Provided in a machine for no-contact bending the edges of a container made of a suitable plastics, are vertical orientation bending knives (21,22) and horizontal orientation bending knives (27,28) · which cooperate with a rest deck (11) for a preformed container (4). The rest deck (11) has a thickness dimension equal to the gap to be made in the bend sought. Following bending to a vertical orientation, the vertical orientation bending knives (21,22) hold the container (4) onto the rest deck (11) while the horizontal orientation bending knives (27,28) are being operated.

FIG.2

EP 0 384 123 A1

This invention relates to a bending machine particularly, but not exclusively, intended for use in manufacturing lines of so-called blister packages.

It is a well-known fact that blister packages are widely and advantageously used to seal off and display generic articles, and specifically small size articles.

Such packages generally comprise a preformed container from a suitable clear plastics which is sealed peripherally to a flat substrate made preferably of hardboard, cardboard, or some other like paper material.

The seal is accomplished by either gluing a peripheral edge of the container to the hardboard substrate or, less frequently, by stapling thereto, or by inserting the hardboard substrate into substantially pocket-like ways provided on the clear container lengthwise and sidewise thereof.

These pocket-like ways are obtained by suitably bending the opposed flat edges of the container in a no-contact fashion.

The term "no-contact bending" refers herein to the bending of an edge, flap, or the like over itself while leaving a gap of a set width between the bent-over surfaces.

It has been common pratice to employ for the purpose bending machines which are designed to bend gradually, or better by application of increasing force, the edges of the plastics container, with the possible concurrent application of heat, so as to deform the plastics without inducing any high localized stresses therein which, as is known, could result in internal deterioration marks in the form of sweeping discoloration in the vicinity of the bends. Conventional bending machines have a particularly complicated construction, not easily maintained, and above all, are made deliberately slow-operating thereby, when included to blister package manufacturing lines, they impose their slow rate on the entire line, affecting its hourly put in a substantial way.

The problem that underlies this invention is to provide a bending machine of the kind specified above, which has such structural and performance characteristics as to afford bends that are free of any faults, distortions, microcracks, and the like, while operating at a fast rate so that it may be used in large output blister package manufacturing lines to advantage.

This problem is solved according to the invention by a bending machine for no-contact bending flat edges of containers preformed from a clear plastics and intended for making blister packages, which machine comprises a feed conveyor for said containers whose flat edges to be bent no-contact extend at least along the feed direction, and is characterized in that it comprises a first station for no-contact bending said edges including:

a plate-like horizontal rest deck for said preformed containers having a thickness dimension which is substantially equal to the gap whereto said no-contact bending is to be carried out, and having opposed straight sides at least along the feed direction;

a first heated bending knife means movable vertically at each said straight sides of the rest deck, wherewith it is arranged to cooperate for heat bending at least a portion of said edges to a vertical orientation;

a means of holding the bent portions of said edges against the straight sides of the rest deck;

a second heated bending knife means movable horizontally at each said straight sides below said plate-like deck to cooperate therewith to heat bend the portions of said edges which have been bent vertical to a horizontal orientation; and

a drive means for driving said first and second bending knife means toward and away from said plate-like rest deck.

The invention features and advantages will become more clearly apparent from the following detailed description of an exemplary embodiment of a bending machine according to the invention, to be read in conjunction with the accompanying illustrative and non-limitative drawings, where:

Figure 1 is a schematical perspective view of a bending machine according to the invention;

Figure 2 is an enlarged scale perspective view showing schematically a major portion of the bending machine of Figure 1;

Figures 3 and 4 are enlarged scale perspective views of a detail of Figure 2;

Figures 5 to 9 illustrate schematically the working sequence of the inventive machine in order to no-contact bending the side edges of a container which has been preformed from a clear plastics material;

Figure 10 shows schematically in perspective a modified embodiment of the bending machine in Figure 1;

Figure 11 is a bottom perspective view of the bending knife assembly of the machine shown in Figure 10, with some parts omitted for clarity;

Figure 12 is a part-sectional side view showing schematically the assembly of Figure 11; and

Figure 13 is a schematic perspective view of a detail of Figure 11.

With reference to the drawing views, a bending machine 1 according to the invention comprises, on a substantially machine frame type of structure 2, a slideway 3 for supporting containers 4, preformed from some suitable clear plastics material, slidably thereon. The containers 4 have flat side edges 5, 6 to be bent over no-contact to accomodate respective hardboard substrates (not shown because conventional) with which they are to form the blister packages sought.

The slideway 3 comprises preferably a pair of angle sectional members 3a, 3b laid side-by-side so as to define an axial slot therebetween which extends along the feed direction of the containers 4 into the machine 1.

An endless chain 6a is carried on the structure 2 at such a location that its upper working run extends at said slot 5. The chain 6a has a plurality of fingers or dogs 7 at regular spacings which protrude through the slot 5 to engage successive containers 4. Said chain 6a, being driven by a motor 8, constitutes a feed conveyor for positively advancing the containers 4 along the slideway 3.

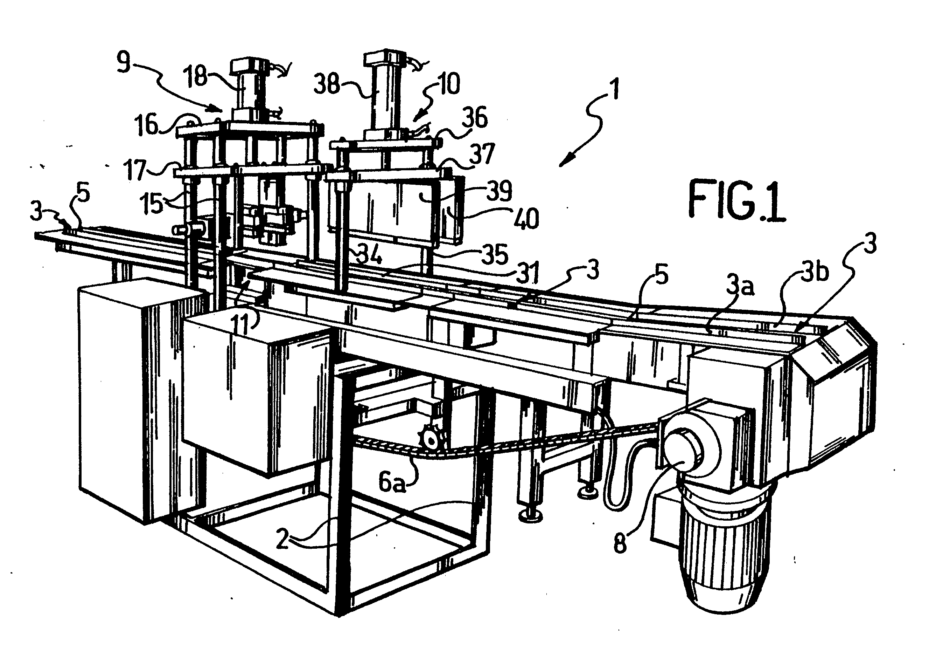

The slideway 3 extends through first and second bending stations, respectively indicated at 9 and 10 in Figure 1.

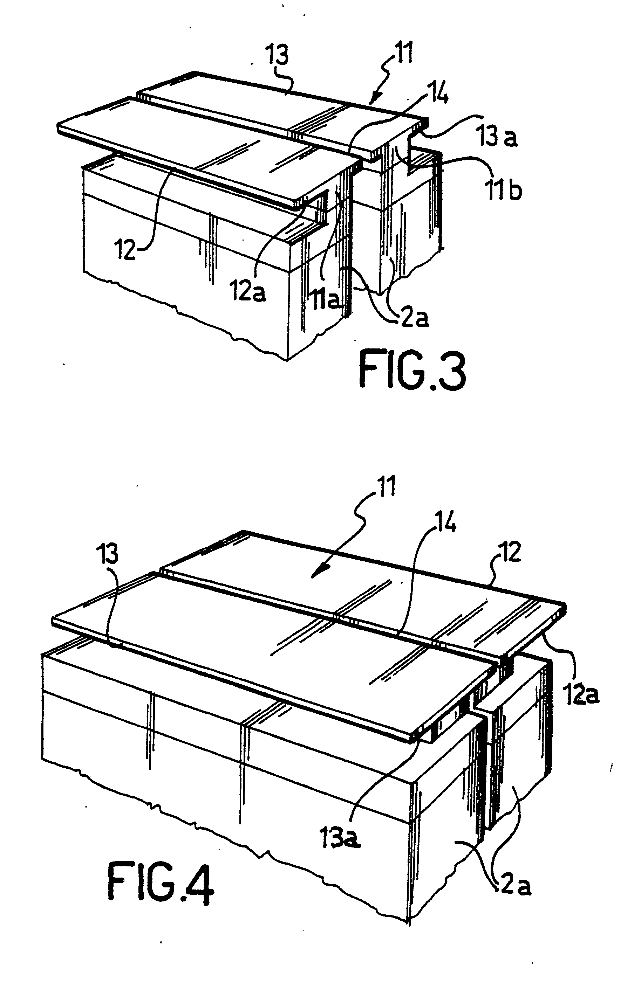

The bending station 9 comprises a horizontal plate-like deck 11 (Figures 3 to 7) which has a thickness dimension equal to the gap to be left under the bent-over edges 5 and 6 of the containers 4 and straight sides 12 and 13 which extend along the feed direction of said containers 4.

In a preferred embodiment, said deck 11 is made up of two parts 11a, 11b which are held spaced apart to define a slot 14 coinciding, over a distance limited to station 9, with the slot 5 of the slideway 3.

Within said station 9, at outward locations from the slideway 3 and symmetrically with respect to it, the structure 2 supports four cylindrical pillars (collectively designated 15) which are interconnected and stiffened at the top by a horizontal plate 16.

A plate-like cart 17, set horizontally to overlie the deck 11, is guided slidably on the pillars 15. An air-operated cylinder 18, carried on the plate 16, drives the cart 17 vertically toward and away from said deck 11. Two vertical arms 19 and 20, attached to the cart 17 and depending therefrom, extend at outward side locations from the deck 11. Secured on said arms 19 and 20 are respective parallelepipedic horizontal strips 21, 22 arranged to face each other and having the same length as the sides 12, 13 of said deck 11.

The walls 21a and 22a of said strips 21 and 22 facing the deck 11 (which walls will be referred to hereinafter as inboard walls) are flat and vertical and held apart from the corresponding straight sides 12 and 13 of the deck 11 by respective distances which are substantially equal to the thickness of the edges 5 and 6 to be bent.

The bottom corner portions of said inboard walls 21a, 22a practically constitute respective bending knives which, in cooperation with said straight sides 12 and 13, are effective to bend said edges 5 and 6 to a vertical orientation as explained hereinafter.

Two sections 23, 24 of flat bar are attached to the arms 19, 20 at locations underlying the strips 21 and 22, respectively and extend parallel to the latter.

Said flat sections 23, 24 have inboard walls 23a, 24a set apart from the straight sides 12 and 13 of the deck 11 by respective distances which are significantly greater than those of the inboard walls 21a, 22a of the corresponding strips 21, 22.

Formed between the strips 21, 22 and said flat bar sections 23, 24 there are formed accordingly straight horizontal ways 25, 26 wherein respective parallelepipedic strips 27, 28 fit slidably which have the same length dimension as the sides 12 and 13 of the deck 11.

The top corner portions of the inboard walls 27a, 28a of said sliding strips 27, 28 constitute respective bending knives which are effective, by cooperating with said straight sides 12, 13 of the deck 11, to bend the edges 5 and 6 of the container 4 to a horizontal orientation, as more clearly explained hereinafter.

Double-acting air-operated cylinders 29 and 30, carried on the vertical arms 19 and 20 of the cart 17, will effect the horizontal-direction movements toward and away from said deck 11 of the strips 17, 28 in a guided fashion.

It should be noted that the strips 21, 22 and 27, 28 may be heated to a selected temperature by conventional heating arrangements, not shown, such as electric resistance heaters incorporated to the vertical arms 19, 20 of the cart 17.

With reference to Figures 1, 8, and 9, the bending station 10 has a rest base 31 consisting of two parts 32, 33 which are substantially L-like in cross-sectional configuration and are oppositely located so as to impart a substantially channel-like cross-sectional shape to said rest base. In actual practice, said rest base 31 would form substantially a suitably strengthened section of the slideway 5. The distance between the upright flanges 32a, 33a of said parts 32, 33 of the rest base 31 would be set in accord with the width of the container 4 having bent edges 5 and 6.

Two vertical cylindrical pillars 34, 35 are supported on the structure 2 on one and the opposite side of the rest base 31 and stiffened at the top by a horizontal cross-piece 36. Mounted slidably on said pillars 34, 35 is a beam 37 movable toward and away from said rest base 31 by operation of a double-acting hydraulic cylinder 38 carried on the cross-piece 36.

Two knife holders 39, 40 are supported on the beam 37 and extend parallel to the direction of advance of the containers 4 on the slideway 5. Each knife holder 39, 40 is arranged to hold at the bottom respective bending knives 41, 42. The spacing of the knife holders 39 and 40 is selected to have the bending knives 41 and 42 overlie the horizontal wings of the rest deck 31.

It should be noted that the bending knives 41, 42 may be also heated to a predetermined temperature by some conventional means, not shown, and that heated may be the parts 32, 33 as well which make up the rest deck 31.

The bending machine described herein above operates as follows.

A container 4 with flat edges 5, 6 is fed by the chain conveyor 6a into the bending station 9 and halted on the plate-like deck 11 thereof. In this position, the side edges 5 and 6 of the container 4 will jut out significantly from the straight sides 12, 13 of said deck 11.

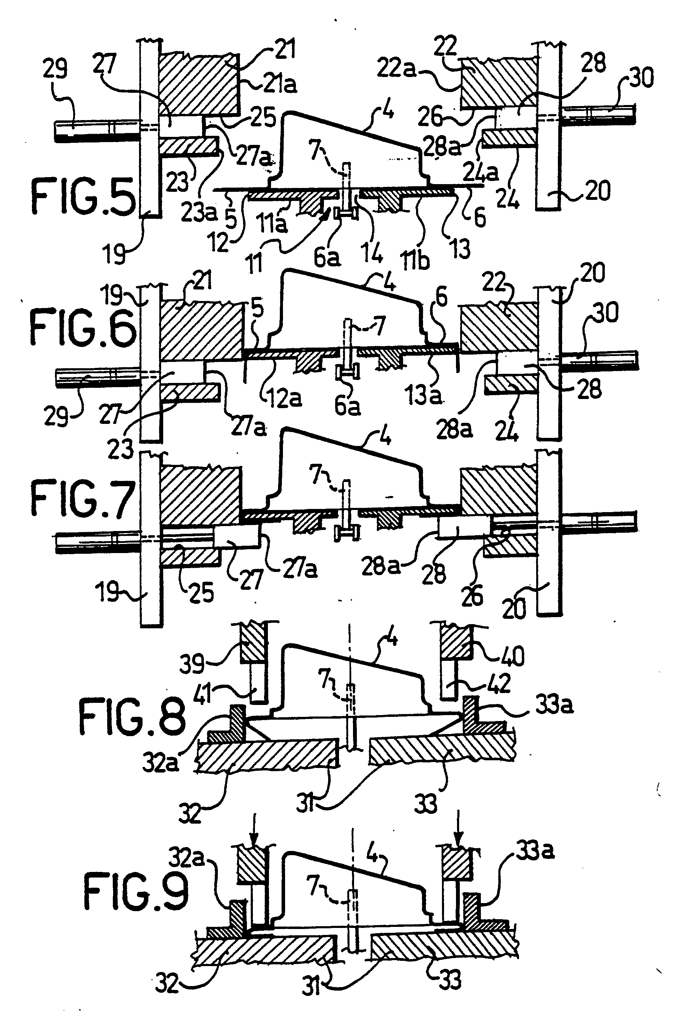

By operating the hydraulic cylinder 18, the cart 17 is moved down toward the deck 11. On the bottom corner portions of the inboard walls 21a, 22a of the heated strips 21 and 22 contacting, during this movement, the edges 5 and 6, these edges will begin to be bent onto the straight sides 12 and 13 of the rest deck. The downward movement of the cart 16 comes to a stop upon the bottom inboard corner of the heated strips 21 and 22 reaching a position flush with the faces 12a, 13a (Figure 6) of the deck 11. With this stop, the bending of the edges 5 and 6 to a vertical orientation is completed.

While holding the cart 17 stationary in the position thus reached (Figure 7) wherein the inboard walls 21a, 22a of the strips 21 and 22 are holding the bent portions of the edges 5 and 6 against the straight sides 12 and 13 of the rest deck 11 (acting therefore as blank holders), the strips 27 and 28 are moved on their respective ways 25 and 26 toward the deck 11 by operating the cylinders 29 and 30. During this movement, on the top inboard corners of the strips 27, 28 contacting the now vertically oriented portions of the flat edges 5 and 6, said portions begin to be bent to a horizontal orientation under the rest deck 13.

Having so completed the "no-contact" bending of the edges 5 and 6 of the container 4, to provide bent over portions where the inside gap will be equal to the thickness of the rest deck 13, the heated strips 27 and 28 are then retracted and the cart 17 is raised to a home position away from said deck 11.

On removal of the strips, the bent over portions of the edges 5 and 6 of the container 4 might tend to spring back somewhat (Figure 8) out of their gap setting.

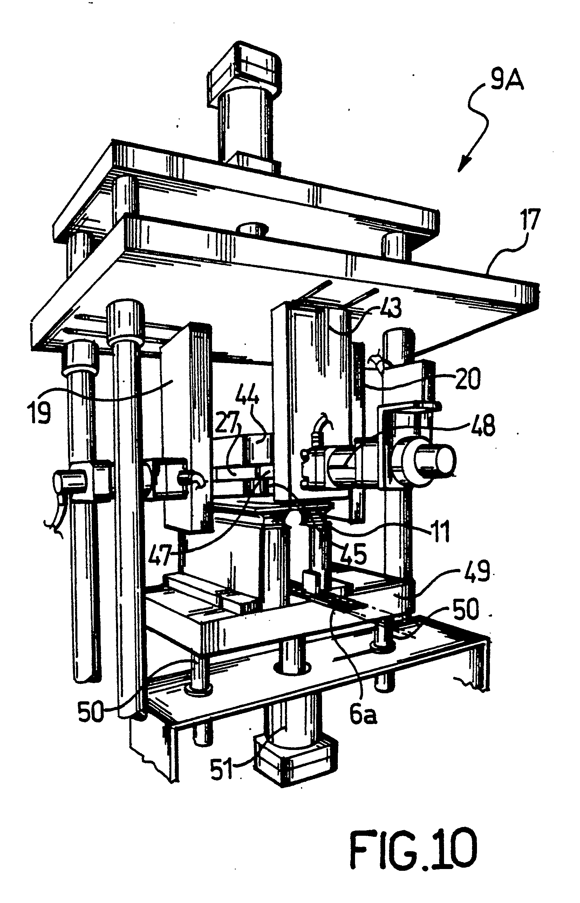

Should this be the case, the container 4, after removal from station 10 would be halted at the bending station 10. By operating the hydraulic cylinder 38, the beam 37 is lowered onto the rest deck 31 to bring the heated bending knives 41 and 42 to press on the bent-over edges 5 and 6 (Figure 9). By this pressure, which may be maintained for a predetermined albeit short time, the desired no-contact bend can be permanently set.

After raising the beam 37 and its related bending knives 41, 42 to a home position away from the rest deck 31, the container 4, presently with the edges 5 and 6 bent over exactly as desired, is removed from the bending station 10 and delivered to the completion of a respective blister package.

The reliable high-rate operation of the bending machine described in the foregoing, as well as its simplicity of construction and operation, is the major and best recognized advantage afforded by this invention.

The invention may be variously altered and modified, of course, from the foregoing description of a schematical example thereof.

Thus, as an example, where the front edge 4a of containers 4 is also to be bent over, the bending machine may be equipped, either at an additional station or preferably at the bending stations 9 and 10 described above, with additional heated bending knives laid across the container feed direction.

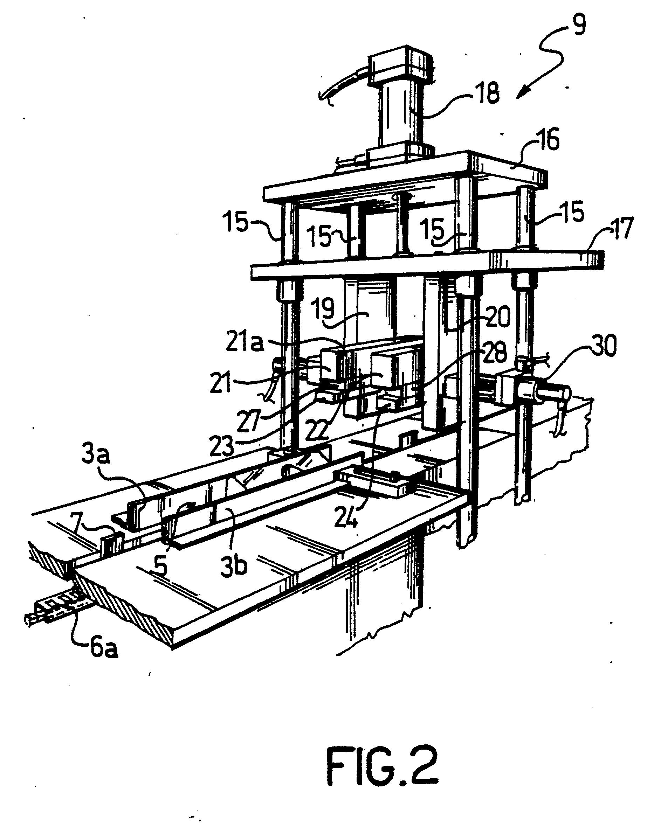

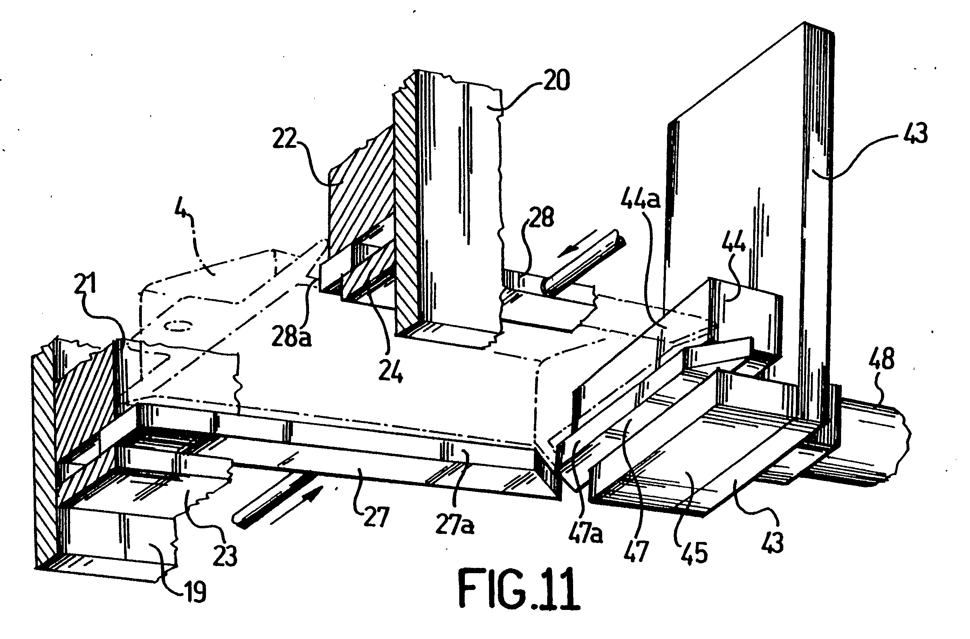

With reference to Figures 10 to 13, a modified embodiment as above of this bending machine will be now described. In these drawing figures, similar parts of the bending machine to those of the machine according to Figures 1 to 9 carry the same reference numerals. At the bending station 9A, the plate-like cart 17 has a further arm 43 (similar to the arms 19, 20 previously described) attached frontally thereto which extends across the running direction of the chain 6a and has a horizontal parallelepipedic strip 44 whose length is at least equal to the length of the front edge 4a of the containers 4.

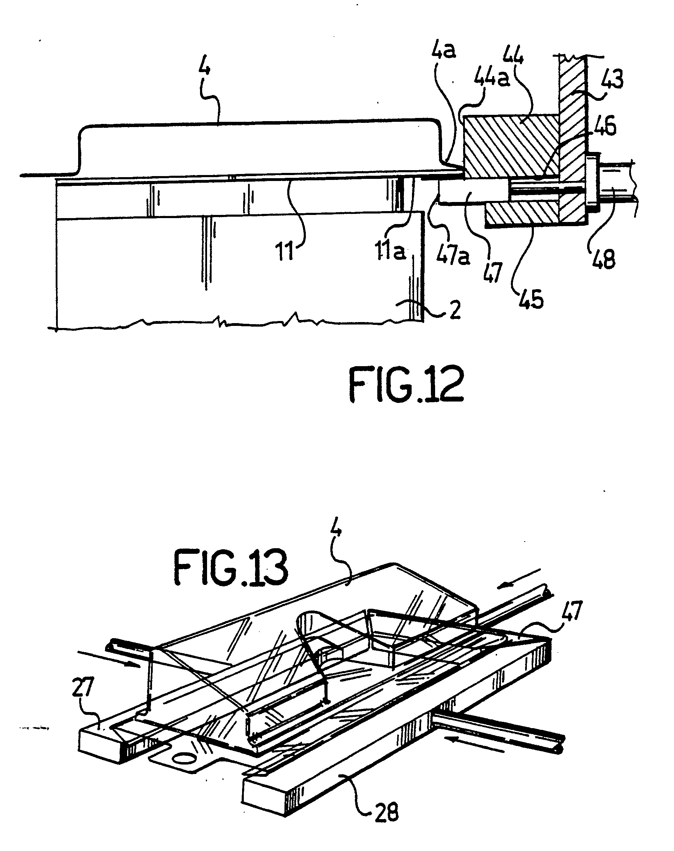

The wall 44a of the strip 44 facing the deck 11 (which wall will be referred to hereinafter and throughout the appended claims as the inboard wall) is flat and vertical and set at a distance from the straight front side 11a (Figure 12) of said deck 11 equal to the thickness of the edge 4a to be bent. The bottom corner portion of the inboard wall 44a constitutes a respective bending knife which is operative to bend the edge 4 to a vertical orientation by cooperating with said straight front side 11a.

At a location beneath the strip 44 and spaced therefrom, the arm 43 mounts a straight parallelepipedic section 45 which extends parallel to the strip 44, wherewith it defines a horizontal slideway 46 in which a strip 47 fits slidably being also parallelepipedic and having a length at least equal to that of the front edge 4a of the container 4.

The top corner portion of the inboard wall 47a of the strip 47 constitutes a bending knife which will provide the horizontal bend in the edge 4a by cooperating with the front side 11a of the deck 11.

A double-acting air cylinder 48 carried on the arm 43 is effective to drive the strip 47 horizontally toward and away from the deck 11 in a guided fashion.

The strips 44 and 47, respectively for vertical and horizontal bending, may be heated to a predetermined temperature just as the corresponding strips of the embodiment shown in Figures 1 to 9.

The bending station 9A, so set up, can advantageously carry out in a single operation the vertical bending of the front edge 4a and the side edges 5 and 6 of a container 4, and with another single operation, the horizontal bending of said edges. It should be noted that, for this purpose, the sliding strips 27, 28 and 47 (horizontal bending knives) have sloping contiguous ends, e.g. at an angle of 45°, to allow them to fit closely in contact during the horizontal bending operation.

Advantageously, the plate-like cart 17 is held stationary in a "high" position, and the rest deck 11 of the station 9A is supported on a further plate-like cart 49 guided for movement on respective upright pillars, collectively indicated at 50, under the drive from an air cylinder 51.

The bending operations, both sidewise and crosswise, are performed in the same manner as on the bending machine according to Figures 1 to 9, with the single difference that the rest deck 11 carrying the containers 4 is driven toward and away from the bending knives, which are instead held stationary.

Advantageously, the cross arm 43 and its bending knives (strips 44 and 47) are mounted detachably to the plate-like cart 17, thereby one bending station is enabled to perform no-contact bends either on two opposed edges or three consecutive edges of one container, whenever the need arises.

The bending machine of this invention, wherein the first bending station 9A can process three edges of one container, should have a second bending station 10a whereat three bending knives, one of which extends crosswise, are operative to be heated for permanently setting the three container edges into the bends formed at the preceding station 9A.

Other structural alterations may be made to the inventive bending machine. Thus, for example, all the strips which constitute bending knives and/or those parts which make up rest decks for the containers to be processed may be made positionable adjustably relatively to one another to accommodate different size containers.

Furthermore, by changing the side profile shape of the rest decks and changing the number of the strips being used to bend over the container edges, different size and shape bends may be obtained from those described hereinabove.

Other variations and modifications, well within the capability of a skilled one in the art, may be applied to the bending machine of this invention without departing, by so doing, from its scope as set forth in the appended claims.

## Claims

1. A bending machine for no-contact bending flat edges of containers preformed from a clear plastics and intended for making blister packages, comprising a feed conveyor for said containers, whose flat edges to be bent no-contact extend at least along the feed direction, which machine is characterized in that it comprises a first bending station (9) including:
a plate-like horizontal rest deck (11) for said preformed containers having a thickness dimension which is substantially equal to the gap whereto said no-contact bending is to be carried out, and having opposed straight sides (12,13) at least along the feed direction;
a first heated bending knife means (21,22) movable vertically at each said sides (12,13) of the plate-like rest deck (11), wherewith it is arranged to cooperate for heat bending at least a portion of said edges (5,6) to a vertical orientation;
a means (21a,22a) of holding said bent portions of the edges (5,6) against said sides (12,13) of the rest deck (11);
a second heated bending knife means (27,28) movable horizontally at each said straight sides (12,13) below said plate-like deck (11) to cooperate therewith to heat bend the portions of said edges (5,6) which have been bent vertical to a horizontal orientation; and
drive means (18,29,30,38) for driving said first and second bending knife means (21,22,27,28) toward and away from said plate-like rest deck (11).

2. A bending machine according to Claim 1, wherein said means of holding said edge (5,6) portions as bent to a vertical orientation against the straight sides (12,13) of the rest deck (11) comprises said first bending knife means (21,22).

3. A bending machine according to Claim 1, wherein said first bending knife means (21,22) is mounted to a cart (17) overlying said plate-like rest deck (11) and being movable along vertical slideways (15) toward and away from it.

4. A bending machine according to Claim 3, wherein said first bending knife means comprises parallelepipedic strips (21,22) extending parallel to said feed direction and having inboard walls (21a,22a) spaced from the corresponding straight sides (12,13) of said rest deck (11) by respective distances which are substantially equal to the thickness of the edges (5,6) to be bent.

5. A bending machine according to Claim 4, wherein said means of holding said edge (5 and 6) portions as bent to a vertical orientation against the sides (12 and 13) of said rest deck (11) comprises said inboard walls (21a,22a) of said strips (21,22).

6. A bending machine according to Claim 3, wherein said cart (17) comprises a horizontal plate slidable on said vertical ways (15), at least two vertical arms (19,20) being supported on and jutting out from said plate (17) and extending outwardly of the straight sides (12,13) of said rest deck (11), said arms (19,20) carrying each a corresponding first bending knife means (21,22).

7. A bending machine according to Claim 6, wherein said first bending knife means comprises the horizontal parallelepipedic strips of Claims 4 and 5, attached to said arms (19 and 20) on the side facing toward said rest deck (11).

8. A bending machine according to Claim 3, wherein said second bending knife means (27,28) fits slidably in ways (25,26) on said cart (17) and is movable toward and away from said plate-like rest deck (11).

9. A bending machine according to either Claim 1 or any of Claims 2 to 8, characterized in that it further comprises at least a second bending station (10) placed in line with said first station (9) along said conveyor (6a), said second station (10) including an essentially channel-like rest deck (31) and a pair of bending knives (41,42) extending along the feed direction of said containers (4) and being movable vertically toward and away from said rest deck (31) to press against it and set the bend performed on the edges (5 and 6) at the preceding station (9).

10. A bending machine according to Claim 1, characterized in that said deck (11a) has at least a third straight side extending across said feed direction, and that it comprises a third heated bending knife means (44) movable vertically at said third side (11a) of the plate-like deck (11), wherewith it cooperates to perform heat bending to a vertical orientation of at least a portion of the edge (4a) of said container (4) lying crosswise to the feed direction, a means (44a) of holding said bent edge (4a) portion against said side (11a) of the rest deck (11), a further heated bending knife means (47) movable horizontally beneath said plate-like deck (11) at said crosswise side (11a), wherewith it cooperates to heat bend to a horizontal orientation the portion of said edge (4a) which has been bent to a vertical orientation, and a drive means for driving said third and fourth bending knife means (44,47) toward and away from said plate-like rest deck (11).

11. A bending machine according to Claim 10, wherein said means of holding the edge (4a) portion bent to a vertical orientation against the crosswise side (11a) of the rest deck (11) comprises the third bending knife means (44).

12. A bending machine according to Claim 11, wherein said third means and said further means (44,47) are mounted on said cart (17) overlying the plate-like rest deck (11).

13. A bending machine according to Claim 12, characterized in that said third and said further bending knife means (44,47) are comprised of respective parallelepipedic strips extending crosswise to said feed direction and having a length dimension at least equal to the length of said edge (4a) to be bent.

14. A bending machine according to Claim 9, characterized in that said second station (10) comprises a third bending knife extending crosswise to the feed direction of the containers (4) and being movable vertically toward and away from said rest deck (31) to press thereagainst and set the bend made on the edge (4a) of the container (4) at the preceding station (9).

15. A bending machine according to Claim 1, characterized in that said deck (11) is supported on a movable cart along vertical ways.

FIG.1

EP 0 384 123 A1

FIG.2

FIG.3

FIG.4

FIG.5

FIG.6

FIG.7

FIG.8

FIG.9

FIG.10

FIG.11

EP 0 384 123 A1

## FIG.12

## FIG.13

European Patent
Office

**EUROPEAN SEARCH REPORT**

Application Number

EP 90 10 1052

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,A | US-A-4 839 126  (GRIESDORN)<br>* Abstract; figures 4,7,10,12 *<br>--- | 1 | B 29 C  53/04<br>B 65 B  49/08 |
| A | US-A-3 753 831  (COPITHORNE)<br>* Figure 4 *<br>--- | 1 | |
| A | US-A-4 239 572  (TOMITA)<br>----- | | |

TECHNICAL FIELDS
SEARCHED (Int. Cl.5)

B 29 C
B 31 F
B 65 B

The present search report has been drawn up for all claims

| Place of search | Date of completion of the search | Examiner |
|---|---|---|
| THE HAGUE | 22-05-1990 | SMOLDERS R.C.H. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)